# FASCICULE DE BREVET EUROPEEN

(11) **EP 4 166 810 B1**
(45) Date de publication et mention de la délivrance du brevet: **30.09.2026**
(21) Numéro de dépôt: 22202190.9
(22) Date de dépôt: 18.10.2022
(51) Int. Cl.: F16F 1/373, F16F 1/44, F16F 15/08, F16F 1/52

(54) **SUPPORTS ANTIVIBRATOIRES POUR ATTÉNUATION BASSE OU HAUTE FRÉQUENCE**
SCHWINGUNGSDÄMPFENDE MEDIEN ZUR DÄMPFUNG VON NIEDER- ODER HOCHFREQUENZ
VIBRATION ISOLATION MOUNTS FOR LOW OR HIGH FREQUENCY DAMPING

(30) Priorité: 18.10.2021 FR 2111009
(43) Date de publication de la demande: 19.04.2023
(73) Titulaire: Delmon Group, 24121 Terrasson - Lavilledieu (FR)
(72) Inventeur: SKIERA, Jean François, 58340 CERCY-LA-TOUR (FR); MAGNIER, OLIVIER, 24120 TERRASSON (FR); BERNARD, Christophe, 19600 SAINT PANTALEON DE LARCHE (FR)
(74) Mandataire: Santarelli

(56) Documents cités:
- DE-A1- 4 414 218
- JP-U- H0 635 698
- US-B1- 6 910 671

## Description

### Domaine technique de l'invention

Le domaine de l'invention est celui des supports antivibratoires pour atténuation basse ou haute fréquence.

Plus précisément, l'invention concerne un support antivibratoire de faible dimension intégrant des limites de débattement adaptées pour suspendre des organes mécaniques.

L'invention trouve notamment des applications pour atténuer ou filtrer des vibrations dans tout domaine technique, comme ceux des transports, du spatial, des machines-outils, etc. Les vibrations peuvent provenir par exemple de moteurs, être liées à une accélération ou à des secousses.

### Technique antérieure

Il est connu de l'art antérieur des techniques d'atténuation basse ou haute fréquence, en particulier des supports antivibratoires. Celles-ci peuvent être utilisées dans plusieurs domaines variés. Elles sont notamment nécessaires pour isoler des systèmes suspendus de masse non nulle. Certains composants sont en effet fragiles, et doivent être protégés des éléments environnants lors des phases de fortes accélérations.

Les supports antivibratoires, souvent adhérisés, comprennent, de manière connue, trois parties. Deux inserts qui comprennent chacun une platine, ces dernières étant positionnées en vis à vis l'une de l'autres et espacées d'une distance donnée. Ces platines sont traditionnellement métalliques. Elles sont reliées entre-elles par une troisième partie, très souvent réalisée en élastomère.

Les dispositifs existants sont volumineux, ce qui constitue un inconvénient significatif dans certains domaines où l'encombrement est restreint.

De plus, ils ne permettent pas de limiter suffisamment les déplacements et le battement entre les pièces lors des phases d'accélération, sous charge ou choc, tout en permettant d'avoir des modes propres bas pour les systèmes suspendus.

Le document US 6910671 B1 a pour objet un support antivibratoire, présentant deux platines.

### Présentation de l'invention

La présente invention vise à pallier tout ou partie des inconvénients de l'art antérieur exposés *supra* en proposant un support antivibratoire amélioré et compact, ayant des rigidités dynamiques proches en traction et en cisaillement, garantissant des fréquences de coupures basses dans toutes les directions, réglées selon le besoin du système suspendu de 20 à 450 Hz.

A cet effet, la présente invention a pour objet un support antivibratoire comprenant deux platines disposées en vis-à-vis l'une de l'autre et un tronçon composé d'un matériau élastomère disposé entre les deux platines.

Le support antivibratoire est destiné à isoler un système suspendu de son environnement. A titre d'exemple non limitatif, le système suspendu peut être une charge dans l'environnement d'une fusée.

Dans le cas non limitatif où la première platine est rectangulaire, on définit un référentiel orthonormal, dit référentiel support antivibratoire, comportant :
- un axe X, dit axe longitudinal, parallèle à un des côtés de la première platine,
- un axe Y, dit axe transversal, perpendiculaire à l'axe longitudinal, et parallèle à un des côtés de la première platine,
- un axe Z, dit axe vertical, perpendiculaire à l'axe longitudinal et à l'axe transversal, et orienté suivant une direction verticale dans l'axe du tronçon.

Selon l'invention le support antivibratoire comprend :
- Une pièce mâle, s'étendant à partir d'une face de la première platine en direction de la deuxième platine, la pièce mâle étant noyée à l'intérieur du tronçon,
- Une pièce femelle s'étendant à partir d'une face de la deuxième platine en direction de la première platine,
lesdites pièces mâle et femelle étant configurées pour être emboîtées l'une dans l'autre.

La pièce femelle comprend également un ou plusieurs évidements dits périphériques uniformément répartis sur son pourtour. Cela permet avantageusement d'adapter la rigidité pour limiter la fréquence des modes de résonance.

Les pièces mâle et femelle peuvent être emboitées à la fois à l'état initial et en fonctionnement, ou seulement en fonctionnement.

L'état initial est l'état dans lequel le support antivibratoire est dit au repos, c'est-à-dire qu'il n'est pas soumis à des efforts particuliers. L'état de fonctionnement est celui lorsque le tronçon est soumis à des efforts de traction, et/ou de compression, et/ou de cisaillement, et/ou de torsion, et/ou des efforts combinés.

Le support antivibratoire permet avantageusement de limiter les fréquences de vibration dans les directions X, Y et Z. De plus, il permet de limiter le déplacement d'un élément par rapport à un autre selon les axes X, Y et Z, le support antivibratoire étant positionné entre les deux éléments. L'un des deux éléments peut être un système suspendu de masse non nulle.

Dans des modes particuliers de réalisation, l'invention peut comporter en outre l'une ou plusieurs des caractéristiques suivantes, prises isolément ou avec chacune de leurs combinaisons techniquement opérantes.

Dans des modes de réalisation particulièrement avantageux, la pièce femelle est incorporée à l'intérieur du tronçon. Cela permet avantageusement d'améliorer l'amortissement et de supporter des accélérations pour des éléments d'une masse plus élevée tout en étant plus compact.

Dans des modes de réalisation particulièrement avantageux, la pièce femelle comprend un évidement interne formant un espace périphérique autour de la pièce mâle. Cela permet avantageusement de limiter le déplacement d'un élément l'un par rapport à l'autre selon les axes X et Y.

Dans des modes de réalisation préféré, la pièce mâle est une tige et/ou la pièce femelle est un cylindre de révolution. Cela permet avantageusement de limiter les débattements dans les directions X, Y et Z.

Les évidements périphériques sont généralement de type non traversant, réalisés sur l'épaisseur de la pièce femelle. Ils peuvent également être réalisés sur l'épaisseur de la pièce femelle et du tronçon.

Dans des modes de réalisation particuliers, la pièce femelle est un cylindre de révolution comprenant une face latérale et une hauteur et elle comprend plusieurs évidements périphériques répartis uniformément sur sa face latérale sur tout ou partie de sa hauteur. Cela permet avantageusement de limiter la masse du support antivibratoire et de garantir des modes propres en traction et en cisaillement proches.

Dans des modes de réalisation particuliers, la pièce mâle est un parallélépipède rectangle et la pièce femelle un parallélépipède rectangle présentant un évidement interne pour permettre à la pièce mâle d'être emboitée dans la pièce femelle. Ce mode de réalisation permet de limiter le moment de torsion s'appliquant sur le support antivibratoire.

Dans des modes de réalisation particulièrement avantageux, la pièce mâle et la première platine sont formées dans une unique pièce et la pièce femelle et la deuxième platine sont formées dans une unique pièce. Ce mode de réalisation vise à faciliter la fabrication du support antivibratoire.

Dans des modes de réalisation particulièrement avantageux, le support antivibratoire comprend un moyen de fixation d'un élément extérieur au support antivibratoire, le moyen de fixation étant solidarisé à l'une des deux platines. Ce moyen de fixation garantit le positionnement du support antivibratoire sur l'élément extérieur et sur la structure. Le moyen de fixation peut être par exemple de type vis-écrou, baïonnette, rivetage, soudage.

### d. Brève description des figures

L'invention sera mieux comprise à la lecture de la description suivante, donnée à titre d'exemple nullement limitatif, et faite en se référant aux figures qui représentent :
- [Fig. 1] est une vue en perspective du support antivibratoire dans un premier mode de réalisation ;
- [Fig. 2] est une vue en perspective du support antivibratoire dans un deuxième mode de réalisation ;
- [Fig. 3] est une vue de profil du support antivibratoire dans un troisième mode de réalisation ;
- [Fig. 4] est une vue en perspective du support antivibratoire dans un quatrième mode de réalisation.

Sur les figures, les différents éléments sont représentés de manière schématique et ne sont pas nécessairement à la même échelle. Sur l'ensemble des figures, les éléments identiques ou équivalents portent la même référence numérique.

### e. Description des modes de réalisation

La présente invention concerne un support antivibratoire destiné à amortir les chocs et les vibrations s'exerçant entre deux éléments. L'invention est décrite dans un contexte particulier d'un de ses domaines d'application préférés, dans lequel le support antivibratoire protège un ou plusieurs équipements spatiaux, ces derniers étant soumis à des efforts significatifs. Rien n'exclut cependant d'utiliser le support antivibratoire dans d'autres cadres d'application, qu'ils soient spatiaux ou non.

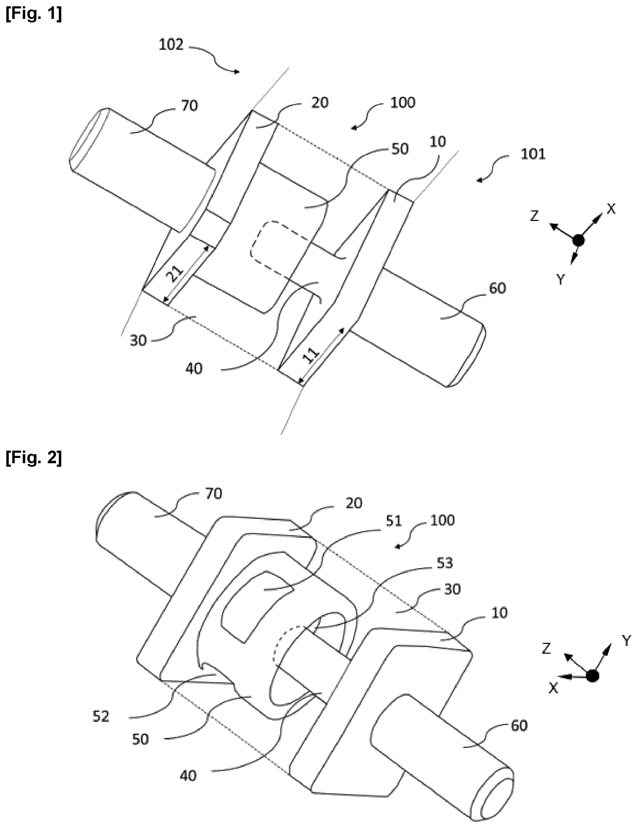

La figure 1 représente un exemple de support antivibratoire qui ne correspond pas à l'invention. La figure 2, la figure 3 et la figure 4 représentent trois exemples non limitatifs d'un support antivibratoire 100 selon l'invention, qui comprend deux platines, une première platine 10 et une deuxième platine 20. Les platines 10 et 20 sont ici fixées entre deux éléments 101 et 102, par exemple par l'intermédiaire des moyens de fixation 60 et 70.

De manière non limitative, l'un des deux éléments 101 et 102 est un système suspendu de masse non nulle à isoler de son environnement. L'autre élément peut être une partie de l'environnement, comme une paroi d'un véhicule tel qu'un lanceur spatial. La suspension est effectuée par le ou les supports antivibratoires (100) fixés entre les deux éléments.

Il convient de souligner que plusieurs supports antivibratoires 100 peuvent être positionnés entre les deux éléments 101 et 102.

Dans les quatre variantes illustrées, les deux platines 10, 20 sont positionnées en vis-à-vis l'une de l'autre. En outre, les platines 10, 20 peuvent être parallèles entre elles, avec par exemple une taille et une forme identiques, telle qu'une forme carrée

Les dimensions du support antivibratoire 100 dépendent de la charge à supporter. Plus la charge à supporter est élevée, plus les dimensions du support antivibratoire 100 sont grandes.

Le support antivibratoire 100 comprend également un tronçon 30.

Le tronçon 30 est disposé entre la première platine 10 et la deuxième platine 20. Il peut être de la forme d'un cylindre de révolution plein. De préférence, les bases du tronçon 30 sont entièrement en contact avec la première et la deuxième platine 10,20. Le tronçon 30 est réalisé dans un matériau élastomère. Dans ce mode de réalisation, de manière non limitative, il est plus précisément réalisé en caoutchouc.

Ainsi, lorsque le support antivibratoire 100 est soumis à des efforts de traction, et/ou de compression, et/ou de cisaillement, et/ou de torsion, et/ou des efforts combinés entre les deux platines 10,20, il filtre les vibrations et atténue les déplacements selon plusieurs directions.

De plus, le support antivibratoire 100 peut comprendre des moyens de fixation 60,70 d'un élément 101,102 extérieur au support antivibratoire 100, le moyen de fixation étant solidaire de l'une des deux platines 10,20. A titre d'exemple, il peut s'agir d'une tige filetée 60,70, destinée à être entourée d'un écrou solidaire de l'un des deux éléments. Il peut également s'agir d'un écrou (non représenté) destiné à ce qu'une tige filetée solidaire de l'un des deux éléments 101,102 soit entourée par cet écrou ou tout autre système de fixation connu à ce jour.

Le système suspendu de masse non nulle que l'on souhaite isoler de son environnement peut être lié à la première 10 ou à la deuxième platine 20 via lesdits moyens de fixation.

On associera au support antivibratoire 100 un référentiel XYZ, dit référentiel support antivibratoire. Ce référentiel support antivibratoire comporte trois axes orthonormés X, Y, Z.

Ledit référentiel support antivibratoire comporte :
- l'axe X, dit axe longitudinal, parallèle à un des côtés de la première platine 10,
- l'axe Y, dit axe transversal, perpendiculaire à l'axe longitudinal, et parallèle à un des côtés de la première platine 10,
- l'axe Z, dit axe vertical, perpendiculaire à l'axe longitudinal et à l'axe transversal, et orienté suivant une direction verticale dans l'axe du tronçon 30.

Le support antivibratoire 100 comprend également une pièce mâle 40. La pièce mâle 40 s'étend à partir d'une face de la première platine 10 en direction de la deuxième platine 20, la pièce mâle étant noyée en tout ou partie à l'intérieur du tronçon 30. La pièce mâle 40 peut être un cylindre de révolution, dont l'axe est parallèle à l'axe Z. Elle peut être réalisée en métal. De préférence, mais de manière non limitative, elle est constituée du même matériau que les platines 10,20.

La pièce mâle 40 est préférentiellement noyée en totalité dans le tronçon 30, comme représenté par les figures 1 à 4.

Comme représentées par les figures 1 à 4, la pièce mâle 40 et la première platine 10 peuvent être formées dans une unique pièce.

Le support antivibratoire 100 comprend également une pièce femelle 50. Cette pièce femelle 50 s'étend à partir d'une face de la deuxième platine 20 en direction de la première platine 10. La pièce femelle 50 est configurée de telle sorte à ce que la pièce mâle 40 puisse s'emboiter dans la pièce femelle 50. L'emboitement peut aussi bien être réalisé à l'état initial qu'en fonctionnement.

L'état initial correspond à l'état dans lequel le support antivibratoire 100 est dit au repos, c'est-à-dire qu'il n'est pas soumis à des efforts particuliers. L'état de fonctionnement est celui lorsque le tronçon 30 est soumis à des efforts de traction, et/ou de compression, et/ou de cisaillement, et/ou de torsion, et/ou des efforts combinés.

La pièce femelle 50 peut être réalisée en métal. Elle est préférentiellement réalisée dans le même matériau que les platines 10,20.

La pièce femelle 50, la pièce mâle 40, les tiges filetées 60,70 peuvent être constituées du même matériau ou de matériaux différents.

Comme représentées par les figures 1 à 4, la pièce femelle 50 et la deuxième platine 20 peuvent être formées dans une unique pièce.

La pièce femelle 50 peut comprendre un évidement interne formant un espace périphérique autour de la pièce mâle 40. Cela permet d'éviter que les pièces mâle 40 et femelle 50 rentrent en contact et s'abiment.

Le tronçon 30 est contenu dans l'évidement interne de la pièce femelle 50. Le tronçon 30 peut également noyer la totalité de l'évidement interne de la pièce femelle 50. Préférentiellement, comme représenté par les figures 1 à 4, le tronçon 30 peut noyer la totalité de la pièce femelle 50. Cette configuration permet un meilleur amortissement des vibrations et des efforts exercés entre les deux platines 10,20. Aussi, cette configuration améliore la stabilité du support antivibratoire 100.

Ainsi, lorsque les deux éléments 101,102 sont soumis à une forte sollicitation telle qu'une forte accélération, un effort élevé, ou un choc, l'un ou les supports antivibratoires 100 disposés entre eux permettent d'amortir les efforts et les vibrations. L'ensemble de ces configurations permet de limiter les déplacements du premier élément 101 par rapport aux deuxième élément 102 selon les axes X, Y et Z. Aussi, cette configuration permet, en fonctionnement, d'adapter les fréquences de coupures sur tous les modes et dans l'ensemble des directions X, Y et Z.

Dans le mode de réalisation représenté en figure 1, ne faisant pas partie de l'invention, la pièce femelle 50 est un cylindre de révolution.

Dans ce mode de réalisation, mais de façon non limitative, la pièce femelle 50 a un pourtour ne comprenant pas d'évidement périphérique.

Ce mode de réalisation permet de limiter les modes propres en traction, et de rapprocher les rigidités dynamiques en cisaillement et en traction. Le support antivibratoire 100, d'après ce mode de réalisation représenté en figure 1, a un encombrement limité selon les axes X, Y et Z. Il peut permettre de supporter, pour des éléments 101,102 suspendus de plusieurs kilogrammes, des accélérations linéaires continues fortes, tout en limitant le déplacement desdits éléments selon les axes X, Y et Z. De surcroit, les fréquences de coupures sont faibles sur tous les modes et dans l'ensemble des directions X, Y et Z. Le support antivibratoire 100 permet ainsi de protéger les deux éléments et d'éviter que ces derniers rentrent en contact.

Dans le mode de réalisation illustré par la figure 2, la pièce femelle 50 est un cylindre de révolution présentant des évidements périphériques répartis uniformément sur son pourtour. De manière non limitative, elle présente trois évidements périphériques 51,52,53 de taille et forme identiques. Lesdits évidements périphériques sont comblés par le tronçon 30. Les évidements périphériques 51, 52,53 peuvent partir de la platine, s'étendre sur une hauteur prédéfinie selon l'axe Z. Le support antivibratoire 100, d'après ce mode de réalisation représenté en figure 2, a un encombrement limité selon les axes X, Y et Z. Il permet de supporter, pour des éléments 101,102 suspendus, des accélérations linéaires continues fortes, tout en limitant le déplacement selon les axes X, Y et Z. De surcroit, les fréquences de coupures sont faibles sur tous les modes et dans l'ensemble des directions X, Y et Z. Ce mode de réalisation permet avantageusement de réduire la masse du support antivibratoire 100.

Intégrer des supports antivibratoires entre les éléments 101 et 102 dans les directions X, Y, et Z a une influence sur le comportement dynamique du système suspendu, plus précisément sur la position de ses modes propres et de ses fréquences de coupures selon les directions X, Y et Z.

Le nombre de supports antivibratoires 100 positionnés entre le système suspendu et son environnement et les raideurs dynamiques dans les trois dimensions sont adaptés pour régler le comportement dynamique dudit système suspendu. En effet, ils permettent d'influer sur la position des modes propres et des fréquences de coupures sur les trois dimensions. Dans le volume utilisé pour le filtrage, des limitations de débattements sont intégrées en X, Y et Z.

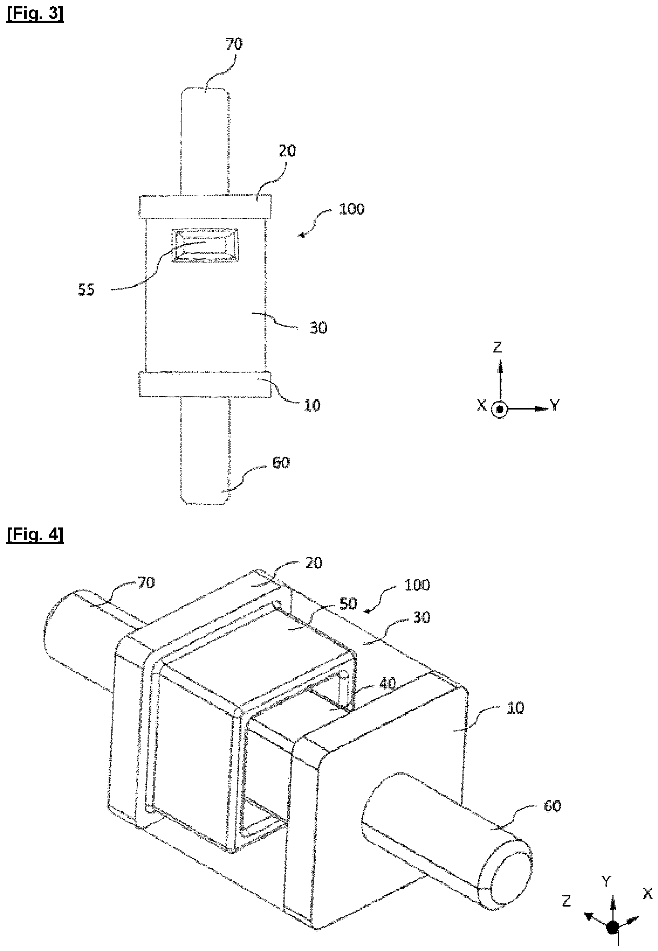

Dans le mode de réalisation illustré par la figure 3, la pièce femelle 50 est un cylindre de révolution présentant un évidement interne. La pièce femelle 50 comprend deux évidements périphériques, dont un évidement périphérique 55 est représenté sur la figure 3, s'étendant sur une partie de la hauteur de la pièce femelle 50. Les deux évidements périphériques peuvent être de tailles égales et de formes identiques. Les deux évidements périphériques 55 peuvent être répartis uniformément autour de la pièce femelle 50. Ils peuvent être face à face l'un de l'autre. Dans cette configuration représentée par la figure 3, en plus de l'épaisseur de la pièce femelle 50, ils peuvent également être réalisés sur l'épaisseur du tronçon 30.

Ce mode de réalisation permet également de limiter le déplacement du premier élément 101 par rapport au deuxième élément 102 selon l'axe X, l'axe Y mais aussi selon l'axe Z.

Les évidements périphériques 55 permettent d'adapter le rapport de raideur X,Y et Z sans pénaliser les limitations de débattements.

Dans le mode de réalisation représenté en figure 4, la pièce mâle 40 est un parallélépipède rectangle et la pièce femelle 50 est un parallélépipède rectangle présentant un évidement interne sur sa hauteur selon l'axe Z pour permettre à la pièce mâle 40 d'être emboitée dans la pièce femelle 50. Les pièces mâle 40 et femelle 50 sont noyées dans le tronçon 30. L'évidement interne de la pièce femelle 50 est d'une dimension supérieure à la pièce mâle pour lui permettre de s'emboiter dans ladite pièce femelle. L'évidement interne est configuré pour englober la pièce mâle. Ce mode de réalisation permet avantageusement de limiter les moments de torsion des deux éléments 101,102.

La pièce femelle 50 présente également des évidements périphériques sur son pourtour. Elle peut avoir un évidement périphérique par face de son pourtour. Les évidements périphériques peuvent être de tailles et de formes identiques. Ils peuvent être de forme rectangulaire ou carrée. Ils permettent avantageusement de limiter la masse du support antivibratoire 100.

Il ressort clairement de la présente description que certains composants du support antivibratoire 100, peuvent être modifiés et que certains ajustements peuvent être apportés, sans pour autant sortir du cadre de l'invention défini par les revendications. Il va de soi que la présente invention n'est pas limitée aux modes de réalisation qui viennent d'être décrits et que diverses modifications peuvent être envisagées par l'homme du métier sans sortir du cadre de l'invention tel que défini par les revendications annexées.

A titre d'exemple, le support antivibratoire 100 peut être intégré à un véhicule automobile, à un poids lourd, à une fusée, et de façon générale à tout système de filtration nécessitant de limiter les débattements.

## Revendications

1. Support antivibratoire (100) comprenant deux platines (10,20) disposées en vis-à-vis l'une de l'autre, un tronçon (30) composé d'un matériau élastomère disposé entre les deux platines (10,20), et une pièce mâle (40), s'étendant à partir d'une face de la première platine (10) en direction de la deuxième platine (20), la pièce mâle (40) étant noyée à l'intérieur du tronçon (30), le support antivibratoire (100) étant **caractérisé en ce qu'**il comprend: une pièce femelle (50) s'étendant à partir d'une face de la deuxième platine (20) en direction de la première platine (10), la pièce femelle (50) comprenant un ou plusieurs évidements dits périphériques (51,52,53) uniformément répartis sur son pourtour, lesdites pièces mâle (40) et femelle (50) étant configurées pour être emboîtées l'une dans l'autre.

2. Support antivibratoire (100) selon l'une quelconque des revendications précédentes, dans laquelle la pièce femelle (50) est incorporée à l'intérieur du tronçon (30).

3. Support antivibratoire (100) selon l'une quelconque des revendications précédentes, dans lequel la pièce femelle (50) comprend un évidement interne formant un espace périphérique autour de la pièce mâle (40).

4. Support antivibratoire (100) selon l'une quelconque des revendications précédentes, dans lequel la pièce mâle (40) est une tige et/ou la pièce femelle (50) est un cylindre de révolution.

5. Support antivibratoire (100) selon la revendication précédente, dans lequel la pièce femelle (50) est un cylindre de révolution comprenant une face latérale et une hauteur et elle comprend plusieurs évidements périphériques (51,52,53) répartis uniformément sur sa face latérale sur tout ou partie de sa hauteur.

6. Support antivibratoire (100) selon l'une des revendications 1 à 3 dans lequel la pièce mâle (40) est un parallélépipède rectangle et la pièce femelle (50) un parallélépipède rectangle présentant un évidement interne sur sa hauteur pour permettre à la pièce mâle (40) d'être emboitée dans la pièce femelle (50).

7. Support antivibratoire (100) selon l'une quelconque des revendications précédentes dans lequel la pièce mâle (40) et la première platine (10) sont formées dans une unique pièce et la pièce femelle (50) et la deuxième platine (20) sont formées dans une unique pièce.

8. Support antivibratoire (100) selon l'une quelconque des revendications précédentes, comprenant un moyen de fixation (60,70) d'un élément extérieur au support antivibratoire, le moyen de fixation (60,70) étant solidaire de l'une des deux platines (10,20).

## Patentansprüche

1. Schwingungsdämpfer (100) umfassend zwei Platten (10, 20), die einander gegenüber angeordnet sind, einen Abschnitt (30), der aus einem Elastomermaterial besteht, das zwischen den beiden Platten (10, 20) angeordnet ist, und ein Steckteil (40), das sich von einer Seite der ersten Platte (10) in Richtung der zweiten Platte (20) erstreckt, wobei das Steckteil (40) im Inneren des Abschnitts (30) versenkt ist, wobei der Schwingungsdämpfer (100) **dadurch gekennzeichnet ist, dass** er Folgendes umfasst:
ein Buchsenteil (50), das sich von einer Seite der zweiten Platte (20) in Richtung der ersten Platte (10) erstreckt, wobei das Buchsenteil (50) eine oder mehrere gleichmäßig über seinen Umfang verteilte sogenannte umlaufende Aussparungen (51, 52, 53) umfasst,
wobei das Steckteil (40) und das Buchsenteil (50) so eingerichtet sind, dass sie ineinander einrasten.

2. Schwingungsdämpfer (100) nach einem der vorhergehenden Ansprüche, wobei das Buchsenteil (50) in das Innere des Abschnitts (30) integriert ist.

3. Schwingungsdämpfer (100) nach einem der vorhergehenden Ansprüche, wobei das Buchsenteil (50) eine innere Aussparung umfasst, die einen umlaufenden Raum um das Buchsenteil (40) bildet.

4. Schwingungsdämpfer (100) nach einem der vorhergehenden Ansprüche, wobei das Steckteil (40) eine Stange ist und/oder das Buchsenteil (50) ein Umdrehungszylinder ist.

5. Schwingungsdämpfer (100) nach dem vorhergehenden Anspruch, wobei das Buchsenteil (50) ein Umdrehungszylinder ist, der eine Seitenfläche und eine Höhe umfasst und mehrere umlaufende Aussparungen (51, 52, 53) umfasst, die gleichmäßig auf seiner Seitenfläche über seine gesamte oder einen Teil seiner Höhe verteilt sind.

6. Schwingungsdämpfer (100) nach einem der Ansprüche 1 bis 3, wobei das Steckteil (40) ein rechteckiges Quader ist und das Buchsenteil (50) ein rechteckiges Quader ist, das in seiner Höhe eine innere Aussparung aufweist, damit das Steckteil (40) in das Buchsenteil (50) eingerastet werden kann.

7. Schwingungsdämpfer (100) nach einem der vorhergehenden Ansprüche, wobei das Steckteil (40) und die erste Platte (10) in einem einzigen Teil ausgebildet sind und das Buchsenteil (50) und die zweite Platte (20) in einem einzigen Teil ausgebildet sind.

8. Schwingungsdämpfer (100) nach einem der vorhergehenden Ansprüche, umfassend ein Befestigungsmittel (60, 70) eines äußeren Elements am Schwingungsdämpfer, wobei das Befestigungsmittel (60, 70) fest mit einer der beiden Platten (10, 20) verbunden ist.

## Claims

1. An anti-vibration support (100) comprising two plates (10, 20) disposed opposite one another, a section (30) made of an elastomer material disposed between the two plates (10, 20), and a male part (40), extending from one face of the first plate (10) in the direction of the second plate (20), the male part (40) being embedded inside the section (30), the anti-vibration support (100) being **characterized in that** it comprises:
a female part (50) extending from one face of the second plate (20) in the direction of the first plate (10), the female part (50) comprising one or more so-called peripheral recess(es) (51, 52, 53) evenly distributed around its circumference,
said male (40) and female (50) parts being configured to be fitted inside one another.

2. The anti-vibration support (100) according to any one of the preceding claims, wherein the female part (50) is incorporated inside the section (30).

3. The anti-vibration support (100) according to any one of the preceding claims, wherein the female part (50) comprises an inner recess forming a peripheral space around the male part (40).

4. The anti-vibration support (100) according to any one of the preceding claims, wherein the male part (40) is a rod and/or the female part (50) is an axisymmetric cylinder.

5. The anti-vibration support (100) according to the preceding claim, wherein the female part (50) is an axisymmetric cylinder comprising a side face and a height and it comprises several peripheral recesses (51, 52, 53) evenly distributed on its side face over all or part of its height.

6. The anti-vibration support (100) according to any one of claims 1 to 3, wherein the male part (40) is a rectangular parallelepiped and the female part (50) is a rectangular parallelepiped having an inner recess over its height to enable the male part (40) to be fitted into the female part (50).

7. The anti-vibration support (100) according to any one of the preceding claims, wherein the male part (40) and the first plate (10) are formed in one-piece and the female part (50) and the second plate (20) are formed in one-piece.

8. The anti-vibration support (100) according to any one of the preceding claims, comprising a means for fastening (60, 70) an external element to the anti-vibration support, the fastening means (60, 70) being secured to one of the two plates (10, 20).
